# EUROPÄISCHE PATENTSCHRIFT

(11) **EP 2 572 416 B1**
(45) Veröffentlichungstag und Bekanntmachung des Hinweises auf die Patenterteilung: **21.09.2016**
(21) Anmeldenummer: 10720779.7
(22) Anmeldetag: 20.05.2010
(51) Int. Cl.: H02B 5/06

(54) **GASISOLIERTE SCHALTANLAGENANORDNUNG**
GAS-INSULATED SWITCHGEAR ASSEMBLY
INSTALLATION DE COMMUTATION À ISOLATION GAZEUSE

(43) Veröffentlichungstag der Anmeldung: 27.03.2013
(73) Patentinhaber: ABB Schweiz AG, 5400 Baden (CH)
(72) Erfinder: SOLOGUREN-SANCHEZ, Diego, CH-5430 Wettingen (CH); SABANI, Arben, 8046 Zürich (CH); KELLER, Markus, CH-8052 Zürich (CH); BOLLI, Tilo, CH-3658 Merligen (CH)
(74) Vertreter: ABB Patent Attorneys
(86) Internationale Anmeldenummer: PCT/EP2010/056982
(87) Internationale Veröffentlichungsnummer: WO 2011/144243

(56) Entgegenhaltungen:
- US-A- 5 777 842
- US-A1- 2002 070 199
- US-A1- 2006 283 841

## Beschreibung

### TECHNISCHES GEBIET

Die Erfindung bezieht sich auf das Gebiet der metallgekapselten gasisolierten Schaltanlagen (GIS), insbesondere der gasisolierten Hochspannungsschaltanlagen.

Die Erfindung betrifft eine gasisolierte Schaltfeld gemäss dem Oberbegriff des Anspruchs 1, sowie eine aus mehreren solchen Schaltanlagen gebildete Unterstation.

### STAND DER TECHNIK

Bei typischen gasisolierten Hochspannungsanlagen ist eine modulare Bauweise der Funktionsgruppen wie Leistungsschalter, Erdschalter usw. eines Schaltfelds bekannt. Ein Schaltfeld wird hier allgemein als Feld einer Schaltanlage verstanden und kann verschiedenartig aufgebaut sein, beispielsweise als Kabelabgangsfeld, als Freiluftabgangsfeld oder als Kuppelfeld zum Verbinden zweier Sammelschienen.

Um eine metallgekapselte, gasisolierte Unterstation zu realisieren, werden typischerweise mindestens zwei Felder eingangsseitig öder ausgangsseitig mit einer sogenannten Sammelschiene zur Übertragung einer Primärleistung elektrisch miteinander verbunden.

Da GIS-Schaltanlagen häufig auch in Ballungsgebieten und/oder anderen räumlich beengten Gebieten eingesetzt werden, kommt neben der Leistungsfähigkeit auch der Kompaktheit einer Unterstation eine sehr grosse Bedeutung zu. Insbesondere bei GIS-Anlagen bzw. Unterstationen mit sehr beengten Gegebenheiten fordert der Markt Schaltanlagen, welche beiden Anforderungen gerecht werden.

In der Folge sind mehrere gasisolierte Schaltanlagen bekannt, welche sich mit der Kompaktheit der GIS befassen. Als stellvertretende Mitglieder einer Vielzahl von Dokumenten der Patentliteratur sind etwa die EP0872931B1, die US2006283841 und die US6614648B2 bekannt.

Die Aufgabe der vorliegenden Erfindung besteht dariri die Leistungsdichte pro Bauvolumen eines GIS-Schaltfeldes und eines mit derartigen Schaltfeldern realisierbaren Unterstation weiter zu erhöhen, damit sich besonders kompakte Unterstationen realisieren lassen.

### DARSTELLUNG DER ERFINDUNG

Bei einer Sammelschiene einer GIS wird grundsätzlich zwischen einer ersten Gattung einer Sammelschiene mit einphasig gekapselter Sammelschienen-Führung und einer zweiten Gattung mit einer dreiphasig gekapselter Sammelschienen-Führung unterschieden. Dementsprechend wirkt sich dies bei GIS der ersten Gattung und der zweiten Gattung mitunter stark auf deren Anlägenlayouts auf. Dies geht beispielsweise aus der EP0872931B1 hervor, welche ein typischer Vertreter der ersten Gattung von GIS mit einphasig gekapselten Sammelschienenleitern ist, während die US6614648B2 ein Vertreter von GIS der zweiten Gattung von GIS ist.

Die Erfindungsidee besteht nun darin, die vielseitige Einsetzbarkeit eines GIS-Schaltfeldes und damit Leistungsdichte pro Bauvolumen eines GIS-Schaltfeldes durch ein Verschmelzen der ersten Gattung von GIS und der zweiten Gattung von GIS zu einer neuen, dritten Gattung von GIS zu verbessern beziehungsweise zu erhöhen. Diese dritte Gattung von GIS bildet einen Hybrid der ersten und zweiten Anlagengattungen. Dieser Hybrid vereint möglichst viele Vorteile beider Gattungen und ermöglicht selbst mit einer mehr-/dreiphasig gekapselten Anordnung der Sammelschienenleiter im Sammelschienengehäuse eine Anschlusstopografie im Raum zu einer Sammelschiene eines benachbarten Schaltfeldes, wie sie von einphasig gekapselten Sammelschienen bekannt ist.

Hinsichtlich des gasisolierten Schaltfeldes wird die Aufgabe dadurch gelöst, dass es mindestens drei Leiterphasen für unterschiedliche elektrische Potentiale aufweist, wobei jede Leiterphase mit einem eigenen Leistungsschalter unterbrechbar ist. Die Leistungsschalter definieren durch ihre Form eine Längsrichtung. Mindestens einer der Leistungsschalter weist einen ersten Leistungsanschluss auf, welcher eine erste Achse definiert, die sich orthogonal zur Längsrichtung erstreckt. Dies trifft typischerweise für alle Leistungsschalter des erfindungsgemässen Schaltfeldes zu. Der Leistungsschalter weist zudem einen zweiten Leistungsanschluss auf, welcher sich orthogonal zur Längsrichtung in dieselbe Richtung erstreckt, wie der erste Leistungsanschluss und welcher zweite Leistungsanschluss eine zweite Achse definiert. Der Leistungsschalter ist über den ersten Leistungsanschluss jeweils mit einem gasisolierten ersten Sammelschienenleiter eines ersten Sammelschienenabschnitts elektrisch leitend verbindbar, so dass der erste Sammelschienenleiter eine dritte Achse definiert, die sich orthogonal zur Längsrichtung und orthogonal zur ersten Achse erstreckt. Der erste Sammelschienenabschnitt weist ein erstes Sammelschienengehäuse auf, in welchem alle ersten Sammelschienenleiter in einem gemeinsamen Gasraum angeordnet sind. Anders ausgedrückt sind alle ersten Sammelschienenleiter im ersten Sammelschienengehäuse dreiphasig gekapselt. Dabei ist ein erster Abstand zwischen der ersten Achse und der zweiten Achse derart bemessen, dass
a) das Schaltfeld in einem ersten Montagezustand einen am ersten Leistungsanschluss elektrisch angeschlossenen ersten Sammelschienenabschnitt aufweist;
b) das Schaltfeld in einem zweiten Montagezustand einen am zweiten Leistungsanschluss elektrisch angeschlossenen zweiten Sammelschienenabschnitt mit einem gasisolierten zweiten Sammelschienenleiter aufweist, welcher zweite Sammelschienenleiter eine vierte Achse definiert. Dabei ist die vierte Achse im zweiten Montagezustand hinsichtlich Lage und Orientierung mit der dritten Achse auf einer gemeinsamen Geraden angeordnet und der zweite Sammelschienenabschnitt weist ein zweites Sammelschienengehäuse aufweist, in welchem alle zweiten Sammelschienenleiter analog zu ersten Sammelschienengehäuse in einem gemeinsamen Gasraum angeordnet sind. Unter dem Begriff "gasisoliertes Schaltfeld" wird dabei ein Schaltfeld (englisch: bay) für eine Hoch- oder Mittelspannungsschaltanlage verstanden.

Obwohl zugunsten der Klarheit vorgängig meist nur von einem einzigen ersten Sammelschienenleiter oder zweiten Sammelschienenleiter pro gesprochen wird, soll dies nicht dahingehend interpretiert werden, dass dies lediglich für eine einzige Phase (beispielsweise R) gilt, sondern dass dies entsprechend analog auch für die anderen Phasen (beispielsweise S und T) gilt, welche ebenfalls je über einen Leistungsschalter mit einem ersten und einem zweiten Leistungsanschluss unterbrechbar sind.

Dadurch, dass der erste Sammelschienenabschnitt und der zweite Sammelschienenabschnitt je ein eigenes Sammelschienengehäuse aufweisen, lässt sich das Gas in den jeweiligen Gasräumen der Sammelschienenabschnitte für alle Phasenleiter eines Sammelschienenabschnitts jeweils gemeinsam überwachen, gegen überdruck schützen, sowie über einen gemeinsamen Befüll-/Entleerstutzen oder dergleichen Füllen oder Evakuieren.

Ein weiterer Vorteil ergibt sich aus der in Richtung der dritten Achse gesehen längsmittigen Anordnung des zweiten Sammelschienenleiters oder des dritten Sammelschienenleiters zwischen dem ersten und dem zweiten Leistungsanschluss des Leistungsschalters, so dass deren dritte Achse und vierte Achse ortsgleich im Raum sind. Da dies nach dem allgemeinen Erfindungsgedanken sinngemäss für alle Phasenleiter der Phasen (beispielsweise R, S und T) eines Schaltfeldes gilt, egal ob es im ersten oder zweiten Montagezustand realisiert worden ist, ist beim erfindungsgemässen Schaltfeld bei mit einer dreiphasig gekapselten Anordnung der Sammelschienenleiter im Sammelschienengehäuse eine Anschlusstopografie zu einer Sammelschiene eines benachbarten Schaltfeldes realisierbar, wie sie sonst nur von einphasig gekapselten Sammelschienen, wie etwa der EP0872931 B1, bekannt war.

Zum Verstehen eines elektrotechnischen Vorteils einer solchen Hybridlösung aus einem einphasigen und einem mehrphasigen Modulabschnitt, hier beispielsweise dem ersten Sammelschienenabschnitt und dem zweiten Sammelschienenabschnitt wird vorgängig kurz das elektrische Verhalten der zwei Gattungen im Fehlerfall eines initialen Störlichtbogens auf einer Phase erläutert.

Im Fall der ersten Gattung mit drei Phasenleitern, welche unabhängig voneinander jeweils in eigenen Gehäusen isoliert - sprich einphasig gekapselt - angeordnet sind, entsteht ein Störlichtbogen beispielsweise zwischen einem ersten Phasenleiter (beispielsweise R) und seinem entsprechenden, metallgekapselten Gehäuse, indem sich der Störlichtbogen bezüglich der Leiterachse radial zur Gehäusewand bildet. Der Kurzschluss (Erdschluss) breitet sich nicht auf die anderen Phasenleiter (etwa S und T) aus, sondern bleibt einphasig bis eine Schutzabschaltung erfolgt oder die Gehäusewand versagt. Mit anderen Worten ist bei einem einphasig gekapselten System nur eine Phase vom Kurzschluss betroffen, während die anderen- zwei Phasen je nach Betriebskonzept weiter zur Leistungsübertragung nutzbar sind.

Im Fall der zweiten Gattung mit drei Phasenleitern, welche gemeinsam in einem Gehäuse isoliert - sprich dreiphasig gekapselt - angeordnet sind, ist das Verhalten im

Störstromfall anders. Aus Gründen der optimalen Raumausnutzung sind die drei Phasenleitern, etwa für die Phasen R,S und T, in Richtung der Sammelschiene gesehen typischerweise in einem gleichschenkligen Dreieck ausgerichtet, dessen Schwerpunkt auf der Rotationsachse des meist zylindrischen Gehäuses angeordnet ist. Nachdem ein Störlichtbogen beispielsweise zwischen einem ersten Phasenleiter (beispielsweise R) und dem metallgekapselten Gehäuse entstanden ist, kann sich das Isoliergas im Gehäuse/Sammelschienengehäuse laufend erhitzen, bis es schliesslich so heiss ist, dass dessen isolierende Wirkung versagt und es leitfähig wird. In der Folge entsteht ein Durchschlag zwischen den Phasen, auch Phasenkurzschluss genannt, mit einem dreiphasiger Lichtbogen. In diesem Störfall entsteht zumindest zu Beginn der Störung kein Lichtbogen zwischen Leiter und dem auf Erdpotential befindlichen Gehäuse.

Die erfindungsgemässe neue, dritte Gattung ist wie bereits erwähnt eine Hybridform der ersten und der zweiten Gattung. Der technische Effekt der Hybridform liegt darin, dass sich die gasisolierte Schaltanlage, beziehungsweise deren Sammelschienenabschnitt, sich im Störlichtbogenfall mehrheitlich wie eine einphasig gekapselte GIS der ersten Gattung verhält, also im Fall eines Störlichtbogens eher zu einem Erdschluss führt, als zu einem energiereicheren, dreiphasigen Lichtbogen, ohne dass auf die Vorteile einer dreiphasig gekapselten GIS verzichtet werden muss. Solche Vorteile bilden beispielsweise eine gemeinsame Befüll- und Entleervorrichtung für das Isolationsgas, ein gemeinsames Überdruckventil (beispielsweise eine Bersteinrichtung), eine gemeinsame Gasdrucküberwachung, eine gemeinsame Teilentladungserfassung und anders mehr, welche eine besonders ökonomische Ausgestaltung der erfindungsgemässen Hybridlösung ermöglichen.

In einer Ausführungsform des gasisolierten Schaltfeldes ist die dritte Achse in Längsrichtung in einem zweiten Abstand zur ersten Achse angeordnet und die die vierte Achse in Längsrichtung in einem dritten Abstand zur zweiten Achse angeordnet ist, wobei der erste Abstand eine Länge gleich der Summe des zweiten Abstands und des dritten Abstands aufweist. Anders ausgedrückt sind der zweite Abstand und der dritte Abstand gleich lang und der erste Sammelschienenleiter oder der zweite Sammelschienenleiter ist mittig zwischen der ersten Achse und der zweiten Achse angeordnet.

Hinsichtlich eines Austausch eines Schaltfeldes aus einer Unterstation, etwa zu Reparaturzwecken, ist es vorteilhaft, wenn jeder erste Leistungsanschluss der Leistungsschalter mit einem entsprechenden gasisolierten ersten Sammelschienenleiter eines ersten Sammelschienenabschnitts elektrisch leitend derart verbindbar ist, dass die dritten Achsen der ersten Sammelschienenleiter in einer ersten Ebene liegen, und dass sich die die erste Ebene orthogonal zur Längsachse und parallel zur ersten Achse beziehungsweise den ersten Achsen erstreckt. Mit anderen Worten sind die Mittellinien (Achsen) der Sammelschienenabschnitte in einer Ebene angeordnet, so sich je nach Ausführungsform die Anschlüsse der Sammelschienenabschnitte in Richtung der dritten Achse in einer Linie befinden.

Soll beispielsweise ein Schaltfeld für eine Unterstation mit einer Einfachsammelschienen- oder einer Doppelsammelschienenanordnung realisiert werden, so weist das Schaltfeld einen am ersten Leistungsanschluss elektrisch angeschlossenen dritten Sammelschienenabschnitt auf, dessen gasisolierter dritte Samrrielschienenleiter eine fünfte Achse definiert. Die fünfte Achse erstreckt sich orthogonal zur Längsrichtung und orthogonal zur ersten Achse. Wie der erste und/oder der zweite Sammelschienenabschnitt weist der dritte Sammelschienenabschnitt ein drittes Sammelschienengehäuse auf, in welchem alle dritten Sammelschienenleiter in einem gemeinsamen Gasraum angeordnet sind. Im Fall einer Unterstation lassen sich aufgrund der Tatsache, dass die Sammelschiene bezüglich der Längsrichtung zwischen dem ersten und dem zweiten Leistungsanschluss angeschlossen ist, besonders kompakte Unterstationen erzielen. Im Fall eines Schaltfeldes einer Doppelsammelschienenanordnung sind in der Folge am ersten Leistungsanschluss sowohl der erste Sammelschienenabschnitt, als auch der zweite Sammelschienenabschnitt elektrisch angeschlossen. Der Begriff "elektrisch angeschlossen" umfasst dabei nicht nur Lösungen, bei welchen die Sammelschienenabschnitte direkt am Leistungsanschluss angeschlossen ist, sondern auch Ausführungsformen, in welchen die Sammelschienenabschnitte über Zwischenstücke oder -module am Leistungsanschluss angeschlossen sind.

Weist bei Ausführungsformen die fünfte Achse dieselben Lagekoordinaten auf, wie eine 180 Grad um die erste Achse rotierte dritte Achse, so lassen sich beispielsweise im Fall einer Unterstation mit einer Doppelsammelschienenanordnung der am zweiten Leistungsanschluss elektrisch angeschlossene zweite Sammelschienenabschnitt eines Kuppelfeldes und der am ersten Leistungsanschluss elektrisch angeschlossene dritte Sammelschienenabschnitt der Doppelsammelschiene mit baugleichen Sammelschienenabschnitten realisieren, was wirtschaftlich besonders vorteilhaft ist.

Je nach Ausführungsform des Schaltfeldes, insbesondere bei Schaltfeldern für eine Doppelsammelschienenanordnung sind der dritte Sammelschienenabschnitt und der erste Sammelschienenabschnitt an einem gemeinsamen, pro Leiterphase einen Leiterknoten bildenden Anschlussmodul befestigt. Dies begünstigt sowohl eine modulare Anschlussweise der einzelnen Module wie der Sammelschienenabschnitte, als auch deren Montageweise an benachbarten Anlagemodulen einer GIS.

Dem innewohnenden Erfindungsgedanken folgend, sind alle Leiterphasen im Anschlussmodul in einem gemeinsamen Gasraum gemeinsam gekapselt angeordnet. Je nach Bedarf umfasst der Anschlussmodul pro Leiterphase einen Arbeitserder.

Falls es die Ausführungsform und die Montagereihenfolge zulassen, sind vorteilhafte Schaltfelder mit wenigen, jedoch multifunktionellen Modulen realisierbar, wenn der Anschlussmodul möglichst direkt an den ersten Leistungsanschluss des dem Phasenleiter zugeordneten Leistungsschalters angeschlossen ist.

Im Gegensatz zu bekannten Schaltfeldern, etwa einem konventionellen Schaltfeld, etwa gemäss der EP0872931 B1, sind besonders kompakte Schaltfelder realisierbar, wenn in Richtung der dritten Achse gesehen alle Leiterknoten in Richtung der ersten Achse auf derselben Höhe angeordnet sind. Dies trifft besonders bei Schaltfeldern für Doppelsammelschienenschaltungen zu. Während bei einem Schaltfeld gemäss der EP0872931 B1 die Leiterknoten in Richtung der Sammelschiene einerseits versetzt und andererseits (in Richtung der ersten Achse) höhenversetzt, was zu einem stufenartigen Aufbau des Schaltfeldes beziehungsweise der Sammelschiene für alle drei Phasen führt, liegen die Leiterknoten des Anschlussmoduls in einer Ebene, so dass sich mit dem erfindungsgemässen Schaltfeld insbesondere im Fall von Kabelabgangsfeldern sehr kompakte Unterstationen realisieren lassen, welche auch für einen Einsatz bei Räumen mit einer niedrigen Raumhöhe geeignet sind.

Hinsichtlich einer besonders modularen Anschlussgeometrie der Sammelschienenabschnitte und des Anschlussmoduls ist es vorteilhaft, wenn im Anschlussmodul jeder Leiterknoten über einen zu den ersten Sammelschienenleitern führenden ersten Anschlussleiterabschnitt verbunden ist. Dabei weisen in Richtung der dritten Achse gesehen alle ersten Anschlussleiterabschnitte geometrisch eine neutrale erste Faser auf, welche ersten Fasern sich in Richtung der Längsachse erstrecken allesamt in einer zweiten Ebene angeordnet sind. Bei einer unidirektionalen Form der neutralen Faser kann diese auch als Achse bezeichnet werden. Die Anschlussgeometrie lässt sich weiter verbessern, wenn im Anschlussmodul jeder Leiterknoten über einen zu den dritten Sammelschienenleitern führenden dritten Anschlussleiterabschnitt verbunden ist. Dabei weisen in Richtung der dritten Achse gesehen alle dritten Anschlussleiterabschnitte geometrisch eine neutrale dritte Faser auf, welche dritten Fasern sich in Richtung der Längsachse erstrecken und allesamt in einer dritten Ebene angeordnet sind. Je nach Ausführungsform sind auch Schaltfelder realisierbar, deren zweite Ebene und/oder die dritte Ebene sich orthogonal zur ersten Achse erstrecken. In einem noch weiter entwickelten Schaltfeld weisen in Richtung der dritten Achse gesehen alle ersten Anschlussleiterabschnitte geometrisch eine neutrale erste Faser auf, welche ersten Fasern sich in Richtung der zweiten Achse erstrecken allesamt in einer gemeinsamen Ebene angeordnet sind. In einem nochmals weiter entwickelten Schaltfeld sind pro Phasenleiter jede neutrale erste Faser und ihre korrespondierende neutrale dritte Faser auf einer gemeinsamen Geraden angeordnet sind. Eine derartige, gegenüberliegende Anordnung der neutralen Fasern der Anschlussleiterabschnitte begünstigt die Kompaktheit des Schaltfeldes zusätzlich, ohne dass die Zugänglichkeit zu Montage- und Wartungszwecken davon besonders negativ betroffen wird.

Während bei konventionellen Schaltfeldern die Gesamtbauhöhe mit der Anzahl Phasen vom Leistungsanschluss des Leistungsschalters her gesehen (also in Richtung der ersten Achse) stets zunimmt, ist die Kompaktheit des erfindungsgemässen Schaltfeldes weiter verbesserbar, wenn in Richtung der dritten Achse gesehen die ersten Sammelschienenleiter derart angeordnet sind, dass höchstens einer der ersten Sammelschienenleiter in Richtung der ersten Achse masslich weiter vom ersten Leistungsanschluss des dem Phasenleiter zugeordneten Leistungsschalters entfernt liegt, als der Leiterknoten. Analog gilt dies auch für Schaltfelder, deren dritte Sammelschienenleiter in Richtung der dritten Achse gesehen derart angeordnet sind, dass höchstens einer der dritten Sammelschienenleiter in Richtung der ersten Achse masslich weiter vom zweiten Leistungsanschluss des dem Phasenleiter zugeordneten Leistungsschalters entfernt liegt, als der Leiterknoten.

Falls es die Festigkeit der betroffenen Bauteile wie etwa dem Anschlussmodul, dem Leistungsschaltergehäuse und dem Sammelschienengehäuse zulässt, können das erste Sammelschienengehäuse und das dritte Sammelschienengehäuse überwiegend vom Anschlussmodul gehalten werden, ohne dass dazu aufwändige Stützmittel zur Aufnahme der mechanischen Kräfte erforderlich sind.

Je nach Ausführungsform des Schaltfeldes ist jeder dritte Sammelschienenleiter in einem vierten Abstand zum dritten Sammelschienengehäuse angeordnet, und entweder jeder erste Sammelschienenleiter im vierten Abstand zum ersten Sammelschienengehäuse angeordnet oder jeder zweite Sammelschienenleiter im vierten Abstand zum zweiten Sammelschienengehäuse angeordnet. Dabei ist der vierte Abstand bezogen auf die Länge der Sammelschienenleiter im Sammelschienenabschnitt mehrheitlich kleiner als ein fünfter Abstand, in welchem die Sammelschienenleiter desselben Sammelschienenabschnitts voneinander entfernt angeordnet sind. Dadurch wird die zum Erdschluss führende Bildung eines Störlichtbogens anstelle einer zu einem dreiphasigen Lichtbogen im Kurzschlussfall begünstigt.

Ein Ein- und Ausbau von Schaltfeldern im Störungs- oder Wartungsfall ist weiter erleichterbar/verbesserbar, wenn erste Anschlussbereiche jedes Sammelschienenabschnitts in einer vierten Ebene und zweite Anschlussbereiche jedes Sammelschienenabschnitts in einer fünften Ebene angeordnet sind. Dies trifft besonders auf Schaltfelder zu, deren vierte Ebene parallel zur fünften Ebene angeordnet ist und sich die vierte Ebene parallel zu einer sechsten Ebene erstreckt, in welcher die erste Achse und die zweite Achse angeordnet sind. Eine derartige Ausführungsform ist besonders ideal, wenn ein Ausbau des Schaltfeldes quer zur Sammelschienenrichtung, in Richtung der Längsachse und in Richtung der ersten Achse (etwa mittels einem Kran) erforderlich ist.

Wenn jeder Sammelschienenleiter im ersten Anschlussbereich und im zweiten Anschlussbereich jeweils über einen einphasigen Isolator gehalten ist, so dass die ersten Anschlussbereiche und die zweiten Anschlussbereiche einphasige Durchführungen aus dem entsprechenden Sammelschienengehäuses bilden, lassen sich besonders einfache, aber dennoch erprobte und wirksame Isolationen und - falls erforderlich - Gasschottkonzepte mit Schottisolatoren erreichen, welche gleichzeitig eine vernünftige Anbindung der Sammelschienenleiter ermöglichen.

Sind die ersten Sammelschienenleiter, die zweiten Sammelschienenleiter und die dritten Sammelschienenleiter überwiegend oder bevorzugt ausser in deren Anschlussbereichen vollständig zylinderförmig ausgebildet, so lassen sich diese beispielsweise aus kostengünstige Strangpressprofile aus Leiterwerkstoffen fertigen, ohne dass auf aufwändige Freiformgeometrien zurückgegriffen werden muss.

Die oben genannten Ausführungsformen sind je nach Bedarf in Kombination oder alternativ zueinander einsetzbar.

Zusammengefasst liegt ein wesentlicher Vorteil des erfindungsgemässen GIS-Schaltfeldes darin, dass dieses so ausgebildet ist, dass es einen im Vergleich mit bekannten Schaltanlagen einen wesentlich kleineren Platzbedarf in der Höhe, das heisst in Richtung der Erdanziehungskraft bei gleichzeitig kleinem Platzbedarf in der Horizontalen (orthogonal zur Richtung der Erdanziehungskraft) erfordert, als bekannte Schaltfelder.

Dasselbe gilt entsprechend für eine Unterstation, welche aus mehreren erfindungsgemässen Schaltfeldern realisierbar ist, weshalb nachfolgend nur noch auf folgende Ausführungsformen von Unterstationen eingegangen wird:
Eine erfindungsgemässe Unterstation weist beispielsweise bei einer Doppelsammelschienenanordnung mindestens drei Schaltfelder auf, wobei mindestens zwei Schaltfelder einen ersten Typ bilden, welche jeweils einen ersten Sammelschienenabschnitt und/oder einen dritten Sammelschienenabschnitt aufweisen, und wobei mindestens ein Schaltfeld einen zweiten Typ bildet, welcher einen zweiten Sammelschienenabschnitt und einen dritten Sammelschienenabschnitt aufweist. Dabei ist der erste Typ von Schaltfeldern typischerweise ein Kabelfeld oder ein Freiluftabgang und der zweite Typ von Schaltfeldern ein Kuppelfeld.

Besonders kompakte Unterstationen sind erzielbar, wenn die ersten Achsen des ersten Typs von Schaltfeldern und des zweiten Typs von Schaltfeldern in einer siebten Ebene angeordnet sind, und wenn die zweiten Achsen des ersten Typs von Schaltfeldern und des zweiten Typs von Schaltfeldern in einer achten Ebene angeordnet sind. Anders ausgedruckt fluchten selbst bei einer Doppelsammelschienenanordnung die Schaltfelder so, dass in Richtung der Längsachse keine stark gegeneinander versetzten Schaltfelder erforderlich sind, welche eine Grundfläche (Aufstellfläche) der Unterstation in deren Breite ungünstig vergrössern.

### KURZE BESCHREIBUNG DER ZEICHNUNGEN

Nachfolgend werden mehrere Ausführungsformen der Erfindung anhand der Zeichnung detailliert erläutert. Hierbei zeigt rein schematisch
- FIG. 1: eine Seitenansicht eines Kabelabgangsfeldes;
- FIG. 2: eine dreidimensionale Ansicht des Kabelabgangsfeldes von Figur 1;
- FIG. 3: eine Seitenansicht eines Kuppelfeldes;
- FIG. 4: eine Draufsicht auf eine Unterstation mit Kabelabgangsfeldern nach Figur 1 und einem Kuppelfeld nach Figur 3; und
- FIG. 5: eine vereinfachte Schnittdarstellung durch einen Sammelschienenabschnitt entlang der Schnittebene V-V in Figur 4.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### WEG ZUR AUSFÜHRUNG DER ERFINDUNG

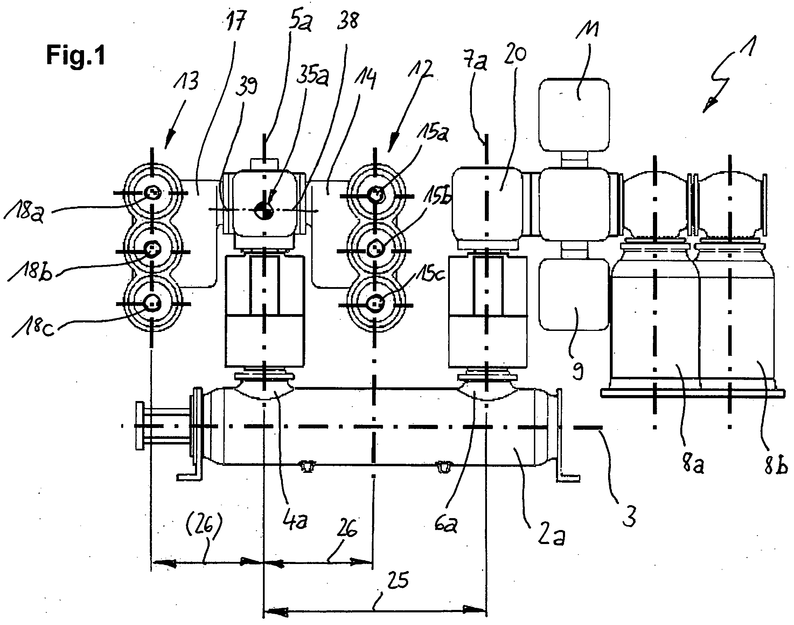

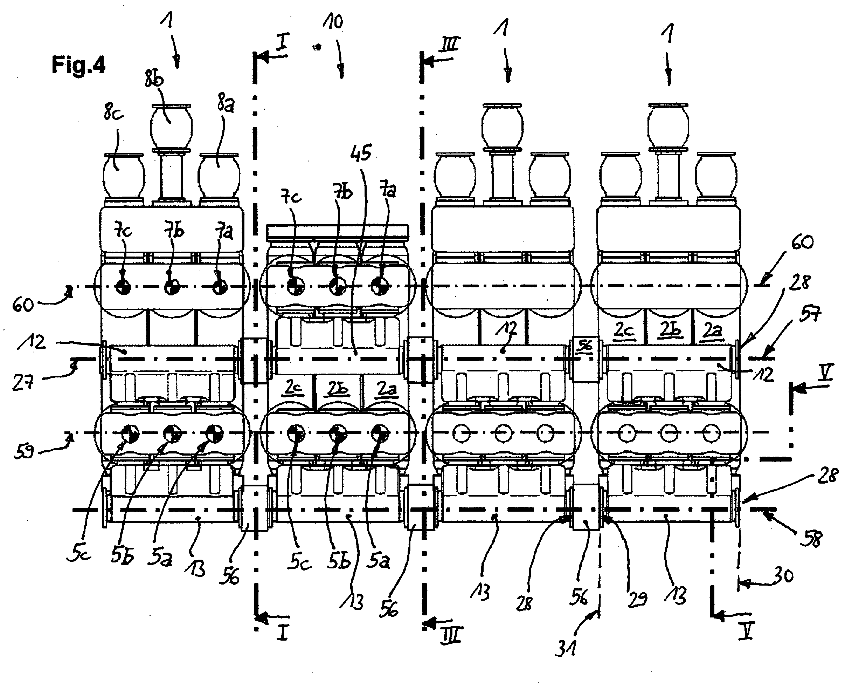

Die in Figur 1 gezeigte, vereinfachte Seitenansicht einer ersten Ausführungsform eines Schaltfeldes 1 in Form eines Kabelabgangsfeldes oder Kabelzugangsfeldes entspricht im Wesentlichen einer Ansicht entlang der Schnittebene I-I in Figur 4.

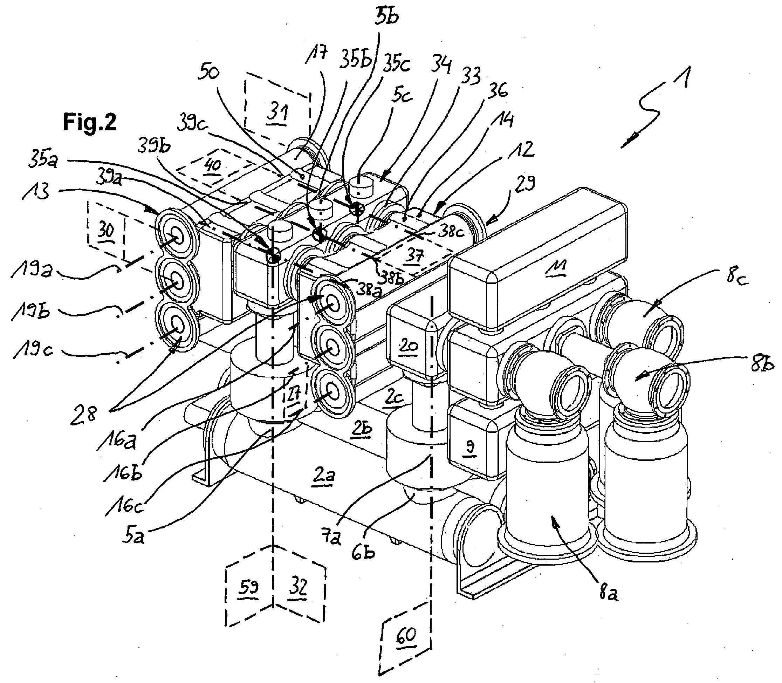

Wie in Zusammenschau mit Figur 4 hervorgeht, umfasst das Schaltfeld 1 pro elektrische Phase einen Leistungsschalter 2a, 2b, 2c zum Unterbrechen der jeweiligen Phasen. Da die Leistungsschalter bei dieser Ausführungsform in deren Seitenansicht deckungsgleich sind, ist, in der Figur 1 nur der Leistungsschalter 2a sichtbar. Aufgrund seiner zylindrischen Gehäuseform definiert der Leistungsschalter eine sich in Längsrichtung erstreckende Längsachse 3. Der Leistungsschalter 2a weist einen ersten Leistungsanschluss 4a auf, welcher eine erste Achse 5a definiert, die sich orthogonal zur Längsrichtung 3 erstreckt. Weiter weist der Leistungsschalter 2a einen zweiten Leistungsanschluss 6a auf, welcher sich orthogonal zur Längsrichtung in dieselbe Richtung erstreckt, wie der erste Leistungsanschluss 4a und welcher zweite Leistungsanschluss 6a eine zweite Achse 7a definiert. Wie in Figur 2 zumindest teilweise angedeutet, gilt dies analog auch für die ersten Leistungsanschlüsse 4b, 4c; die ersten Achsen 5b, 5c; die zweiten Leistungsanschlüsse 6b, 6c sowie die zweiten Achsen 7b, 7c .der anderen zwei Phasen des Schaltfeldes 1.

Weiter weist das Schaltfeld pro Phase einen Kabelausgang auf, von welchen in Figur 1 der Kabelausgang 8c von den Kabelausgängen 8a, 8b verdeckt, in Figur 2 jedoch zu sehen ist. Jeder Kabelausgang kann je nach Ausführungsform und Bedarf als auch Kabeleingang dienen und/oder als Freilufteingang oder Freiluftabgang ausgestaltet sein. Die Kabelausgänge sind über/entlang Hilfsmodulen wie etwa einschaltfesten Erdschaltern 9, Arbeitserdschaltern 20 und Spannungsmesseinheiten 11 mit den jeweiligen zweiten Leistungsanschlüssen über Phasenleiter elektrisch verbunden. Auf diese Hilfsmodule wird an dieser Stelle nicht näher eingegangen.

Das Kabelabgangsfeld 1 ist für eine Doppelsammelschienen-Schaltanordnung in einer Unterstation ausgebildet und weist daher einen ersten Sammelschienenabschnitt 12 und einen dritten Sammelschienenabschnitt 13 auf. Der erste Sammelschienenabschnitt 12 weist ein erstes Sammelschienengehäuse 14 auf, in welchem pro Phase ein erster Sammelschienenleiter 15a, 15b, 15c angeordnet ist. Alle ersten Sammelschienenleiter 15a, 15b, 15c sind gemeinsam in einem Gasraum des ersten Sammelschienengehäuses 14 gegeneinander isoliert und dreiphasig gekapselt angeordnet und definieren durch ihre Zylinderform und Ausrichtung jeweils eine dritte Achse 16a, 16b, 16c, wie insbesondere aus Figur 2 hervorgeht. Die dritten Achsen 16a, 16b, 16c erstrecken sich orthogonal zur Längsrichtung 3 und orthogonal zur ersten Achse 5a, 5b, 5c.

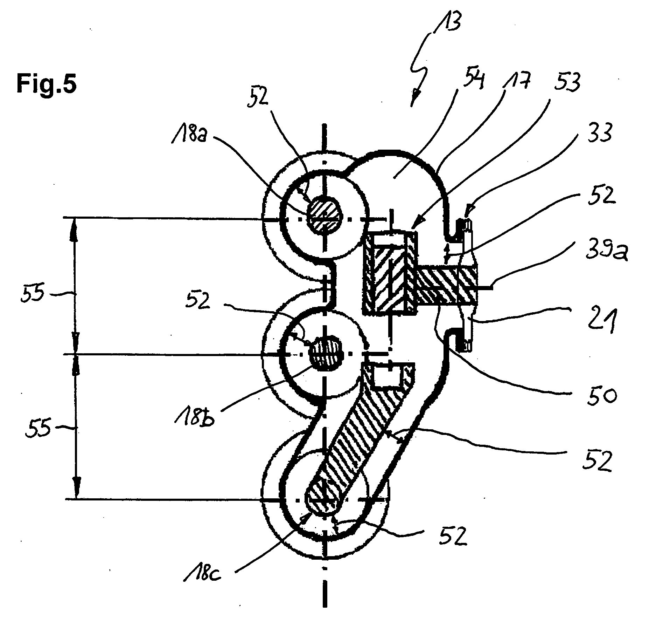

Beim Isoliergas in den Gasräumen handelt es sich um Schwefelhexafluorid oder um ein Gasgemisch. Pro Sammelschienenleiter weist jedes Sammelschienengehäuse eine Sammelschienenöffnung auf, um eine separate Durchführung des ihr zugedachten Sammelschienenleiters zu ermöglichen. Unter separater Aufnahme ist hierbei zu verstehen dass die Sammelschienenleiter jeweils einphasig in den jeweiligen Öffnungen angeordnet sind, insbesondere durch einen einphasigen Isolator durchführend angeordnet sind. Wie in Zusammenschau mit Figur 5 hervorgeht, dienen einphasige Isolatoren 21 entsprechend zur Aufnahme lediglich eines einzigen Phasenleiters beziehungsweise hier Sammelschienenleiters.

Wie insbesondere aus der Figur 2 hervorgeht, weist der dritte Sammelschienenabschnitt 13 analog dem ersten Sammelschienenabschnitt 12 ein drittes Sammelschienengehäuse 17 auf, in welchem pro Phase daher ein dritter Sammelschienenleiter 18a, 18b, 18c angeordnet ist. Alle dritten Sammelschienenleiter 18a, 18b, 18c sind gemeinsam in einem Gasraum des dritten Sammelschienengehäuses 17 gegeneinander isoliert und dreiphasig gekapselt angeordnet und definieren durch ihre Zylinderform und Ausrichtung jeweils eine fünfte Achse 19a, 19b, 19c, wie insbesondere aus Figur 2 hervorgeht. Die fünften Achsen 19a, 19b, 19c erstrecken sich orthogonal zur Längsrichtung 3 und orthogonal zur ersten Achse 5a, 5b, 5c.

Die erste Achse ist von der zweiten Achse in einem ersten Abstand 25 beabstandet angeordnet. Die dritten Achsen 16a, 16b, 16c sind in Längsrichtung 3 in einem zweiten Abstand 26 zur ersten Achse 5a, 5b, 5c angeordnet. Die fünften Achsen 19a, 19b, 19c sind dabei derart angeordnet, dass sie dieselben Lagekoordinaten aufweisen wie die 180 Grad um die ersten Achsen 5a, 5b, 5c rotierten dritten Achsen 16a, 16b, 16c.

Alle ersten Achsen 5a, 5b, 5c sind in einer ersten Ebene 27 angeordnet, so dass sie in Richtung der dritten Achse 16 gesehen entlang einer Geraden in gleichmässigem Abstand voneinander entfernt angeordnet sind. Dies gilt sinngemäss auch für alle dritten Achsen 18a, 18b, 18c.

Stirnseitig weisen die Sammelschienenabschnitte 12, 13 je einen ersten Anschlussbereich 28 und einen zweiten Anschlussbereich 29 auf. Die ersten Anschlussbereiche 28 sind in einer vierten Ebene 30 angeordnet, während die zweiten Anschlussbereiche 29 jedes Sammelschienenabschnitts in einer fünften Ebene 31 angeordnet sind. Diese vierte Ebene 30 ist parallel zur fünften Ebene 31 angeordnet und erstreckt sich überdies parallel zu einer sechsten Ebene 32, in welcher beispielsweise die erste Achse 5a und die zweite Achse 7a einer Phase angeordnet sind. Jeder Sammelschienenleiter ist sowohl im ersten Anschlussbereich 28, als auch im zweiten Anschlussbereich 29 jeweils über einen einphasigen Isolator gehalten, so dass die ersten Anschlussbereiche 28 und die zweiten Anschlussbereiche 29 einphasige Durchführungen aus dem entsprechenden Sammelschienengehäuses bilden.

Besonders deutlich geht aus der Figur 2 hervor, dass sowohl der erste Sämmelschienenabschnitt 12, wie auch der dritte Sammelschienenabschnitt 13 jeweils pro Leiterphase einen separaten Anschlussflansch auf (in Figur 2 bei der Leiterphase mit der ersten Achse 5c stellvertretend für alle anderen Phasen mit Anschlussflansch 33 gekennzeichnet). Mit anderen Worten ausgedrückt weist jedes Sammelschienengehäuse pro Phase eine Sammelschienenöffnung auf, um eine separate Durchführung des ihr zugedachten Sammelschienenleiters zu ermöglichen. Unter separater Aufnahme ist hierbei wiederum zu verstehen dass die Sammelschienenleiter jeweils einphasig in den jeweiligen Öffnungen angeordnet sind, insbesondere durch einen einphasigen Isolator durchführend angeordnet sind. Einphasige Isolatoren dienen entsprechend zur Aufnahme lediglich eines einzigen Phasenleiters beziehungsweise hier Sammelschienenleiters.

In dieser Ausführungsform des Schaltfeldes 1 wird das erste Sammelschienengehäuse 14 und das dritte Sammelschienengehäuse 17 über die Anschlussflansche 33 an einem zwischen ihnen angeordneten Anschlussmodul 34 gehalten. Der Anschlussmodul 34 und die Sammelschienengehäuse 14, 17 sowie die Leistungsschalter sind festigkeitsmässig derart ausgebildet, dass die Sammelschienengehäuse 14, 17 mechanisch nur oder überwiegend vom Anschlussmodul 34 gehalten werden.

Der Anschlussmodul 34 beinhaltet einen pro Leiterphase einen Leiterknoten 35a, 35b, 35c, welcher eine elektrische Primärleistungsverbindung der Sammelschienenleiter 15a, 15b, 15c, 18a, 18b, 18c mit den jeweiligen ersten Leistungsanschlüssen 4a, 4b, 4c der ihnen zugedachten Leistungsschalter 2a, 2b, 2c bildet. Jeder dieser Leiterknoten 35a, 35b, 35c ist über einen zu den ersten Sammelschienenleitern 15a, 15b, 15c führenden ersten Anschlussleiterabschnitt verbunden. In Richtung der dritten Achse 16 gesehen weisen alle ersten Anschlussleiterabschnitte geometrisch eine neutrale erste Faser auf, welche ersten Fasern sich in Richtung der Längsachse 3 erstrecken allesamt in einer zweiten Ebene 37 angeordnet sind. Der besseren Übersicht wegen ist in Figur 2 lediglich der erste Anschlussleiterabschnitt 36 eines Phasenleiters bei der ersten Achse 5c stellvertretend für die restlichen Phasenleiter und die ersten Fasern 38a, 38b, 38c aller ersten Anschlussleiterabschnitte im Bereich der Anschlussflansche 33 referenziert. Entsprechendes gilt für den dritten Sammelschienenabschnitt 13, bei welchem in Richtung der dritten Achse 16 gesehen alle dritten Anschlussleiterabschnitte 50 geometrisch eine neutrale dritte Faser 39a, 39b, 39c aufweisen, welche dritten Fasern sich im dritten Anschlussleiterabschnitt in Richtung der Längsachse 3 erstrecken und allesamt in einer dritten Ebene 40 angeordnet sind. Unter neutraler Faser wird in diesem Zusammenhang nicht eine elektrisch neutrale Phase oder Faser verstanden, sondern die geometrische Mittellinie oder neutrale Faser, wie sie von zylindrischen Profilformen bekannt. Bei kreiszylindrischen Querschnitten eines Phasenleiters entspricht die neutrale Faser daher der Rotationsachse.

Zudem sind in Richtung der dritten Achse 16 gesehen sind alle Leiterknoten in Richtung der ersten Achse 5 (ausgehend von den ersten Leistungsanschlüssen gesehen) auf derselben Höhe angeordnet, so dass sich die zweite Ebene 37 und die dritte Ebene 40 orthogonal zur ersten Achse 5 erstrecken, wobei die die zweite Ebene 37 und die dritte Ebene 40 identisch, das heisst aufeinander fallend, sind. In der Folge ist pro Phasenleiter jede neutrale erste Faser 38a, 38b, 38c und ihre korrespondierende neutrale dritte Faser 39a, 39b, 39c auf einer gemeinsamen Geraden angeordnet. Wie insbesondere aus Figur 1 hervorgeht, sind in Richtung der dritten Achse 16 gesehen die ersten Sammelschienenleiter 15a, 15b, 15c und die dritten Sammelschienenleiter 18a, 18b, 18c derart angeordnet sind, dass lediglich der ersten Sammelschienenleiter 15a und der dritte Sammelschienenleiter 18a in Richtung der ersten Achse masslich weiter vom ersten Leistungsanschluss 4a des dem Phasenleiter zugeordneten Leistungsschalters 2a entfernt liegt, als der zugehörige Leiterknoten 35a.

Der Anschlussmodul 34 umfasst pro Leiterphase bei Bedarf zudem einen Arbeitserder (nicht gezeigt). Wie in den Sammelschienenabschnitten 12, 13 sind auch im Anschlussmodul 34 alle Leiterphasen in einem gemeinsamen Gasraum gemeinsam gekapselt angeordnet.

Im Hinblick auf die nachfolgend erläuterte Ausführungsform eines weiteren Schaltfeldes ist noch darauf hinzuweisen, dass die orthogonal zur sechsten Ebene 32 verlaufende erste Ebene 27 mit den dritten Achsen 16a, 16b, 16c in Richtung der Längsachse 3 gesehen mittig zwischen den ersten Achsen 5a, 5b, 5c und den zweiten Achsen 7a, 7b, 7c angeordnet ist. In der Folge beträgt der zweite Abstand 26 die Hälfte des ersten Abstandes 25.

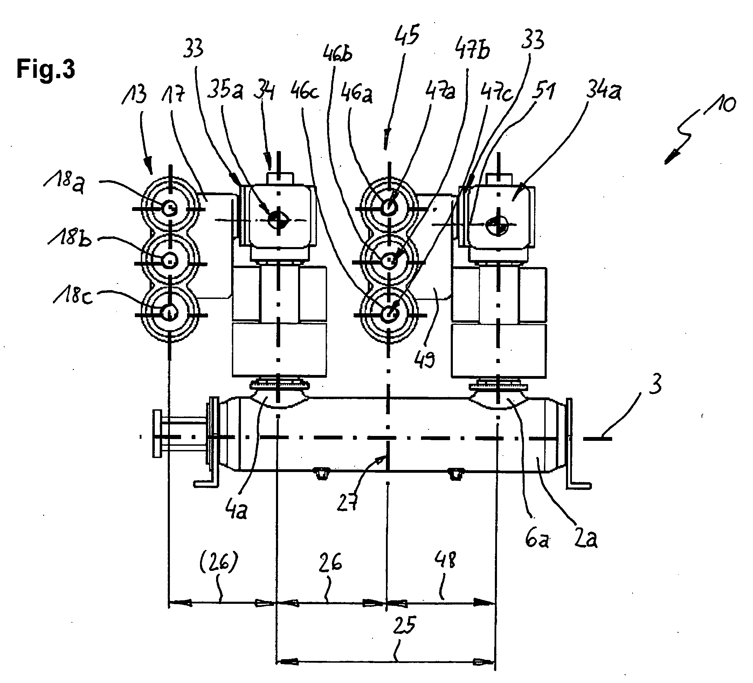

Die in Figur 3 gezeigte, vereinfachte Seitenansicht einer zweiten Ausführungsform eines Schaltfeldes 10 in Form eines Kuppelfeldes, in einer Ansicht, welche im Wesentlichen einer Ansicht entlang der Schnittebene III-III in Figur 4 entspricht. Auf die Beschreibung identischer oder gleich wirkender Elemente im Vergleich zum Kabelfeld 1 wird verzichtet und die Referenzzeichen entsprechend beibehalten. Daher werden nachfolgend hauptsächlich die Unterschiede zum Schaltfeld 1 der ersten Ausführungsform hingewiesen.

Da bei dieser Ausführungsform des Schaltfeldes 10 ein erster Sammelschienenabschnitt fehlt, sind die Anschlussflansche an dieser Stelle entweder mit Deckeln verschlossen oder der Anschlussmodul 34 entsprechend angepasst. Anstelle des ersten Sammelschienenabschnitts weist das Kuppelfeld 10 einen primärleistungsmässig mit dem zweiten Leistungsanschluss 6a, 6b, 6c verbundenen zweiten Sammelschienenabschnitt 45 auf. Da dieser in diesem Fall baugleich wie der dritte Sammelschienenabschnitt 13 ist, entsprechen die dritten Sammelschienenleiter 18a, 18b, 18c beim zweiten Sammelschienenabschnitt 45 entsprechend zweiten Sammelschienenleitern 46a, 46b, 46c. Diese zweiten Sammelschienenleiter 46a, 46b, 46c definieren entsprechend vierte Achsen 47a, 47b, 47c, welche in einem dritten Abstand 48 von den zweiten Achsen 7a, 7b, 7c angeordnet sind. Verglichen mit dem ersten Montagezustand des Schaltfeldes 1 bezüglich des ersten Sammelschienenabschnittes ist der dritte Abstand 48 im Fall des zweiten Montagezustandes des Schaltfeldes 10 bei gleichbleibendem ersten Abstand 25 gleich gross, wie der zweite Abstand 26. In Richtung der vierten Achsen gesehen, sind die vierten Achsen 47a, 47b, 47c derart in der ersten Ebene 27 angeordnet, dass die vierten Achse im zweiten Montagezustand hinsichtlich Lage und Orientierung mit den dritten Achsen auf einer gemeinsamen Geraden ortsgleich im dreidimensionalen Raum angeordnet sind. Wie beim ersten Sammelschienenabschnitt sind die drei alle zweiten Sammelschienenleiter 46a, 46b, 46c in einem gemeinsamen Gasraum angeordnet, welcher von einem zweiten Sammelschienengehäuse 49 begrenzt ist.

Analog dem ersten Sammelschienenabschnitt ist das zweite Sammelschienengehäuse 49 des zweiten Sammelschienenabschnittes 45 ebenfalls an einem Anschlussmodul 34a befestigt. In der zweiten Ausführungsform 10 ist der Anschlussmodul 34a und der Sammelschienenabschnitt 45 baugleich wie bei der ersten Ausführungsform des Schaltfeldes 1, weshalb für die weiteren Details des zweiten Sammelschienenabschnittes 45 auf die Beschreibung für den ersten Sammelschienenabschnitt verwiesen wird.

Bei beiden Ausführungsformen 1, 10 sind die ersten Sammelschienenleiter 15, die zweiten Sammelschienenleiter 46 und die dritten Sammelschienenleiter 18 im Wesentlichen zylinderförmig ausgebildet. Dasselbe gilt zumindest im Bereich der Anschlussflansche auch für die zweiten Anschlussleiterabschnitte 51.

Weiter ist festzuhalten, dass je nach Ausführungsform des Schaltfeldes 1, 10 jeder dritte Sammelschienenleiter 18a, 18b, 18c in einem vierten Abstand 52 durch den Gasraum zum dritten Sammelschienengehäuse 17 angeordnet ist. Analog dazu ist entweder jeder erste Sammelschienenleiter 15a, 15b, 15c oder jeder zweite Sammelschienenleiter 46a, 46b, 46c im vierten Abstand 52 zum ersten Sammelschienengehäuse 14 beziehungsweise dem zweiten Sammelschienengehäuse 49 angeordnet. Wie im Zusammenhang mit Figur 5 hervorgeht, ist dieser vierte Abstand 52 kleiner als ein fünfter Abstand 55, in welchem die Sammelschienenleiter desselben Sammelschienenabschnitts voneinander entfernt angeordnet sind, beispielsweise die Sammelschienenleiter 15a, 15b, 15c des ersten Sammelschienenabschnitts 12. Im Fall der Ausführungsform des Sammelschienenabschnitts 13 von Figur 5 ist pro Phasenleiter, wie etwa zwischen dem dritten Anschlussleiterabschnitt 50 und dem dritten Sammelschienenleiter 18c ein weiterer Schalter in Form eines Trenners 53 im gemeinsamen Gasraum 54 angeordnet.

Nachfolgend wird die in Figur 4 dargestellte Draufsicht auf eine erfindungsgemässe Unterstation mit einer Doppelsammelschienenanordnung mit drei einen ersten Typ bildenden Kabelabgangsfeldern nach Figur 1 und einem Kuppelfeld vom zweiten Typ von Schaltfeldern nach Figur 3 eingegangen, wobei hier nur vier repräsentative Schaltfelder ausschnittsweise und vereinfacht dargestellt sind. Aus der Figur 4 wird ersichtlich, dass zwischen zwei dritten Sammelschienenabschnitten 13 und zwischen ersten und zweiten Sammelschienenabschnitten 12, 45 pro Phasenleiter jeweils ein Verbindungsmodul 56 angeordnet ist, so dass eine durchgehende erste Sammelschiene 57 und eine durchgehende zweite Sammelschiene 58 gebildet sind. Die Verbindungsmodule 56 schaffen eine ebenfalls gasisolierte Verbindung zweier benachbarter Sammelschienenleiter derselben Phase und dienen als Zugang zu den ersten Anschlussbereichen 28 und den zweiten Anschlussbereichen 29.

Da die Leistungsschalter 2a, 2b, 2c sowohl bei Schaltfeldern des ersten Typs 1, als auch des zweiten Typs 10 weitestgehend identisch sind, sind die Schaltfelder 1, 10 derart relativ zueinander anordenbar, dass die ersten Achsen 5a, 5b, 5c des ersten Typs von Schaltfeldern 1 und des zweiten Typs von Schaltfeldern 10 gemeinsam in einer siebten Ebene 59 angeordnet sind. Entsprechend sind die zweiten Achsen 7a, 7b, 7c des ersten Typs von Schaltfeldern 1 und des zweiten Typs von Schaltfeldern 10 in einer achten Ebene 60 angeordnet.

### BEZUGSZEICHENLISTE

- 1, 10: Schaltfeld
- 2a,2b,2c: Leistungsschalter
- 3: Längsrichtung, Längsachse
- 4a,4b,4c: Erster Leistungsanschluss
- 5a,5b,5c: Erste Achse
- 6a,6b,6c: Zweiter Leistungsanschluss
- 7a,7b,7c: Zweite Achse
- 8a,8b,8c: Kabelausgang
- 9: Einschaltfester Erder
- 11: Spannungsmesseinheit
- 12: Erster Sammelschienenabschnitt
- 13: Zweiter Sammelschienenabschnitt
- 14: Erstes Sammelschienengehäuse
- 15a,15b,15c: Erster Sammelschienenleiter
- 16a,16b,16c: Dritte Achse
- 17: Drittes Sammelschienengehäuse
- 18a,18b,18c: Dritter Sammelschienenleiter
- 19a,19b,19c: Fünfte Achse
- 20: Arbeitserdschalter
- 25: Erster Abstand
- 26: Zweiter Abstand
- 27: Erste Ebene
- 28: Erster Anschlussbereich
- 29: Zweiter Anschlussbereich
- 30: Vierte Ebene
- 31: Fünfte Ebene
- 32: Sechste Ebene
- 33: Anschlussflansch
- 34, 34a: Anschlussmodul
- 35a,35b,35c: Leiterknoten
- 36: Erster Anschlussleiterabschnitt
- 37: Zweite Ebene
- 38a,38b,38c: Neutrale erste Faser
- 39a,39b,39c: Neutrale zweite Faser
- 40: Dritte Ebene
- 45: Zweiter Sammelschienenabschnitt
- 46a,46b,46c: Zweiter Sammelschienenleiter
- 47a,47b,47c: Vierte Achse
- 48: Dritter Abstand
- 49: Zweites Sammelschienengehäuse
- 50: Dritter Anschlussleiterabschnitt
- 51: Zweiter Anschlussleiterabschnitt
- 52: Vierter Abstand
- 53: Schalter / Trenner
- 54: Gasraum
- 55: Fünfter Abstand
- 56: Verbindungsmodul
- 57: Erste Sammelschiene
- 58: Zweite Sammelschiene
- 59: Siebte Ebene
- 60: Achte Ebene

## Patentansprüche

1. Gasisoliertes Schaltfeld (1, 10) mit mindestens drei Leiterphasen für unterschiedliche elektrische Potentiale, wobei jede Leiterphase mit einem eigenen Leistungsschalter (2a, 2b, 2c) unterbrechbar ist, und wobei die Leistungsschalter (2a, 2b, 2c) durch ihre Form eine Längsrichtung (3) definieren, und wobei mindestens einer der Leistungsschalter (2a, 2b, 2c) einen ersten Leistungsanschluss (4a, 4b, 4c) aufweist, welcher eine erste Achse (5a, 5b, 5c) definiert, die sich orthogonal zur Längsrichtung (3) erstreckt, und wobei der Leistungsschalter (2a, 2b, 2c) einen zweiten Leistungsanschluss (6a, 6b, 6c) aufweist, welcher sich orthogonal zur Längsrichtung (3) in dieselbe Richtung erstreckt, wie der erste Leistungsanschluss (4a, 4b, 4c) und welcher zweite Leistungsanschluss (6a, 6b, 6c) eine zweite Achse (7a, 7b, 7c) definiet, wobei der Leistungsschalter (2a, 2b, 2c) über den ersten Leistungsanschluss (4a, 4b, 4c) jeweils mit einem gasisolierten ersten Sammelschienenleiter (15a, 15b, 15c) eines ersten Sammelschienenabschnitts (12) elektrisch leitend verbindbar ist, so dass der erste Sammelschienenleiter (15a, 15b, 15c) eine dritte Achse (16a, 16b, 16c) definiert, die sich orthogonal zur Längsrichtung (3) und orthogonal zur ersten Achse (5a, 5b, 5c) und orthogonal zur zweiten Achse (7a, 7b, 7c) erstreckt, und wobei der erste Sammelschienenabschnitt (12) ein erstes Sammelschienengehäuse (14) aufweist, in welchem alle ersten Sammelschienenleiter (15a, 15b, 15c) in einem gemeinsamen Gasraum angeordnet sind, **dadurch gekennzeichnet, dass** ein erster Abstand (25) zwischen der ersten Achse (5a, 5b, 5c) und der zweiten Achse (7a, 7b, 7c) derart bemessen ist, dass
a) das Schaltfeld (1) in einem ersten Montagezustand einen am ersten Leistungsanschluss (4a, 4b, 4c) elektrisch angeschlossenen ersten Sammelschienenabschnitt (12) aufweist;
b) das Schaltfeld (10) in einem zweiten Montagezustand einen am zweiten Leistungsanschluss (6a, 6b, 6c) elektrisch angeschlossenen zweiten Sammelschienenabschnitt (45) mit einem gasisolierten zweiten Sammelschienenleiter (46a, 46b, 46c) aufweist, welcher zweite Sammelschienenleiter (46a, 46b, 46c) eine vierte Achse (47a, 47b, 47c) definiert, wobei die vierte Achse (47a, 47b, 47c) im zweiten Montagezustand hinsichtlich Lage und Orientierung mit der dritten Achse (16a, 16b, 16c) auf einer gemeinsamen Geraden angeordnet ist, und wobei der zweite Sammelschienenabschnitt (45) ein zweites Sammelschienengehäuse (49) aufweist, in welchem alle zweiten Sammelschienenleiter (46a, 46b, 46c) in einem gemeinsamen Gasraum angeordnet sind.

2. Schaltfeld nach Anspruch 1, **dadurch gekennzeichnet, dass** die dritte Achse (16a, 16b, 16c) in Längsrichtung (3) in einem zweiten Abstand (26) zur ersten Achse (5a, 5b, 5c) angeordnet ist, und dass die die vierte Achse (47a, 47b, 47c) in Längsrichtung in einem dritten Abstand (48) zur zweiten Achse (7a, 7b, 7c) angeordnet ist, wobei der erste Abstand (25) eine Länge gleich der Summe des zweiten Abstands (26) und des dritten Abstands (48) aufweist, wobei der zweite Abstand (26) und der dritte Abstand (48) gleich lang sind.

3. Schaltfeld nach Anspruch 1 oder 2, **dadurch gekennzeichnet, dass** jeder erste Leistungsanschluss (4a, 4b, 4c) der Leistungsschalter (2a, 2b, 2c) mit einem entsprechenden gasisolierten ersten Sammelschienenleiter (15a, 15b, 15c) eines ersten Sammelschienenabschnitts (12) elektrisch leitend derart verbindbar ist, dass die dritten Achsen (16a, 16b, 16c) in einer ersten Ebene (27) liegen, und dass sich die die erste Ebene (27) orthogonal zur Längsachse (3) und parallel zur ersten Achse (5a, 5b, 5c) erstreckt.

4. Schaltfeld nach einem der Ansprüche 1 bis 3, **dadurch gekennzeichnet, dass** das Schaltfeld (1) einen am ersten Leistungsanschluss (4a, 4b, 4c) elektrisch angeschlossenen dritten Sammelschienenabschnitt (13) aufweist, dessen gasisolierter dritte Sammelschienenleiter (18a, 18b, 18c) eine fünfte Achse (19a, 19b, 19c) definiert, welche sich orthogonal zur Längsrichtung (3) und orthogonal zur ersten Achse (5a, 5b, 5c) erstreckt, wobei der dritte Sammelschienenabschnitt (13) ein drittes Sammelschienengehäuse (17) aufweist, in welchem alle dritten Sammelschienenleiter (18a, 18b, 18c) in einem gemeinsamen Gasraum (54) angeordnet sind.

5. Schaltfeld nach Anspruch 4, **dadurch gekennzeichnet, dass** die fünfte Achse (19a, 19b, 19c) dieselben Lagekoordinaten aufweist, wie eine 180 Grad um die erste Achse (5a, 5b, 5c) rotierte dritte Achse (16a, 16b, 16c).

6. Schaltfeld (10) nach Anspruch 4 oder 5, **gekennzeichnet durch** einen am zweiten Leistungsanschluss (6a, 6b, 6c) elektrisch angeschlossenen zweiten Sammelschienenabschnitt (45).

7. Schaltfeld nach Anspruch 4 oder 5, **gekennzeichnet durch** einen ebenfalls am ersten Leistungsanschluss (4a, 4b, 4c) elektrisch angeschlossenen ersten Sammelschienenabschnitt (12).

8. Schaltfeld nach Anspruch 7, **dadurch gekennzeichnet, dass** der dritte Sammelschienenabschnitt (13) und der erste Sammelschienenabschnitt (12) an einem gemeinsamen, pro Leiterphase einen Leiterknoten (35a, 35b, 35c) bildenden Anschlussmodul (34) befestigt sind, wobei der Anschlussmodul (34) am ersten Leistungsanschluss (4a, 4b, 4c) des dem Phasenleiter zugeordneten Leistungsschalters (2a, 2b, 2c) angeschlossen ist.

9. Schaltfeld nach Anspruch 8, **dadurch gekennzeichnet, dass** der Anschlussmodul (34) pro Leiterphase einen Arbeitserder umfasst, wobei alle Leiterphasen im Anschlussmodul (34) in einem gemeinsamen Gasraum gemeinsam gekapselt angeordnet sind.

10. Schaltfeld nach einem der Ansprüche 8 oder 9, **dadurch gekennzeichnet, dass** in Richtung der dritten Achse (16a, 16b, 16c) gesehen alle Leiterknoten (35a, 35b, 35c) in Richtung der ersten Achse (5a, 5b, 5c) auf derselben Höhe angeordnet sind.

11. Schaltfeld nach einem der Ansprüche 1 bis 10, **dadurch gekennzeichnet, dass** jeder dritte Sammelschienenleiter (18a, 18, 18c) in einem vierten Abstand (52) zum dritten Sammelschienengehäuse (17) angeordnet ist, und entweder jeder erste Sammelschienenleiter (15a, 15b, 15c) im vierten Abstand (52) zum ersten Sammelschienengehäuse (14) angeordnet ist oder jeder zweite Sammelschienenleiter (46a, 46b, 46c) im vierten Abstand (52) zum zweiten Sammelschienengehäuse (49) angeordnet ist, wobei der vierte Abstand (52) kleiner als ein fünfter Abstand (55) ist, in welchem die Sammelschienenleiter (15a, 15b, 15c; 46a, 46b, 46c; 18a, 18, 18c) desselben Sammelschienenabschnitts (12, 45, 13) voneinander entfernt angeordnet sind.

12. Schaltfeld nach einem der Ansprüche 1 bis 11, **dadurch gekennzeichnet, dass** erste Anschlussbereiche (28) jedes Sammelschienenabschnitts (12, 45, 13) pro Schaltfeld (1, 10) in einer vierten Ebene (30) und zweite Anschlussbereiche (29) jedes Sammelschienenabschnitts (12, 45, 13) in einer fünften Ebene (31) angeordnet sind, wobei die vierte Ebene (30) parallel zur fünften Ebene angeordnet ist und sich die vierte Ebene (31) parallel zu einer sechsten Ebene (32) erstreckt, in welcher die erste Achse (5a, 5b, 5c) und die zweite Achse (7a, 7b, 7c) angeordnet sind.

13. Schaltfeld nach einem der Ansprüche 1 bis 12, **dadurch gekennzeichnet, dass** jeder Sammelschienenleiter (15a, 15b, 15c; 46a, 46b, 46c; 18a, 18, 18c) im ersten Anschlussbereich (28) und im zweiten Anschlussbereich (29) jeweils über einen einphasigen Isolator gehalten ist, so dass die ersten Anschlussbereiche (28) und die zweiten Anschlussbereiche (29) einphasige Durchführungen aus dem entsprechenden Sammelschienengehäuse (14, 49, 17) bilden.

14. Schaltfeld nach einem der Ansprüche 1 bis 13, **dadurch gekennzeichnet, dass** die ersten Sammelschienenleiter (15a, 15b, 15c), die zweiten Sammelschienenleiter (46a, 46b, 46c) und die dritten Sammelschienenleiter (18a, 18b, 18c) zylinderförmig ausgebildet sind.

15. Unterstation mit mindestens drei Schaltfeldern nach einem der Ansprüche 1 bis 14, wobei mindestens zwei Schaltfelder (1) von einem ersten Typ sind, welche jeweils einen ersten Sammelschienenabschnitt (12) und/oder einen dritten Sammelschienenabschnitt (13) aufweisen, und wobei mindestens ein Schaltfeld (10) ein Schaltfeld eines zweiten Typs ist, welcher zweite Typ (10) einen zweiten Sammelschienenabschnitt (45) und einen dritten Sammelschienenabschnitt (13) aufweist.

16. Unterstation nach Anspruch 15, **dadurch gekennzeichnet, dass** die Schaltfelder des ersten Typs (1) und des zweiten Typs (10) mittels einer Doppelsammelschienenanordnung miteinander verbunden sind, wobei der erste Typ (1) von Schaltfeldern ein Kabelfeld (1) oder ein Freiluftabgang ist, und wobei der zweite Typ (10) von Schaltfeldern ein Kuppelfeld (10) ist.

## Claims

1. Gas-insulated switchgear bay (1, 10) having at least three conductor phases for different electrical potentials, wherein each conductor phase can be interrupted by its own circuit breaker (2a, 2b, 2c), and wherein the shapes of the circuit breakers (2a, 2b, 2c) define a longitudinal direction (3), and wherein at least one of the circuit breakers (2a, 2b, 2c) has a first power connection (4a, 4b, 4c) which defines a first axis (5a, 5b, 5c) which extends orthogonally with respect to the longitudinal direction (3), and wherein the circuit breaker (2a, 2b, 2c) has a second power connection (6a, 6b, 6c) which extends orthogonally with respect to the longitudinal direction (3) in the same direction as the first power connection (4a, 4b, 4c) and which second power connection (6a, 6b, 6c) defines a second axis (7a, 7b, 7c), wherein the circuit breaker (2a, 2b, 2c) can be electrically conductively connected via the first power connection (4a, 4b, 4c) to a respective gas-insulated first busbar conductor (15a, 15b, 15c) of a first busbar section (12), such that the first busbar conductor (15a, 15b, 15c) defines a third axis (16a, 16b, 16c) which extends orthogonally with respect to the longitudinal direction (3) and orthogonally with respect to the first axis (5a, 5b, 5c) and orthogonally with respect to the second axis (7a, 7b, 7c), and wherein the first busbar section (12) has a first busbar housing (14) in which all of the first busbar conductors (15a, 15b, 15c) are arranged in a common gas area, **characterized in that** a first distance (25) between the first axis (5a, 5b, 5c) and the second axis (7a, 7b, 7c) is of such a size that
a) the switchgear bay (1) has a first busbar section (12) which is electrically connected to the first power connection (4a, 4b, 4c), in a first mounting state,
b) the switchgear bay (10) has a second busbar section (45) which is electrically connected to the second power connection (6a, 6b, 6c) and has a gas-insulated second busbar conductor (46a, 46b, 46c), in a second mounting state, which second busbar conductor (46a, 46b, 46c) defines a fourth axis (47a, 47b, 47c), wherein the fourth axis (47a, 47b, 47c) is arranged with respect to position and orientation on a common straight line with the third axis (16a, 16b, 16c) in the second mounting state, and wherein the second busbar section (45) has a second busbar housing (49) in which all of the second busbar conductors (46a, 46b, 46c) are arranged in a common gas area.

2. Switchgear bay according to Claim 1, **characterized in that** the third axis (16a, 16b, 16c) is arranged at a second distance (26) from the first axis (5a, 5b, 5c) in the longitudinal direction (3), and **in that** the fourth axis (47a, 47b, 47c) is arranged at a third distance (48) from the second axis (7a, 7b, 7c) in the longitudinal direction, wherein the first distance (25) has a length equal to the sum of the second distance (26) and the third distance (48), wherein the second distance (26) and the third distance (48) are of the same length.

3. Switchgear bay according to Claim 1 or 2, **characterized in that** each first power connection (4a, 4b, 4c) of the circuit breakers (2a, 2b, 2c) can be electrically conductively connected to a corresponding gas-insulated first busbar conductor (15a, 15b, 15c) of a first busbar section (12), such that the third axes (16a, 16b, 16c) lie on a first plane (27), and such that the first plane (27) extends orthogonally with respect to the longitudinal axis (3) and parallel to the first axis (5a, 5b, 5c).

4. Switchgear bay according to one of Claims 1 to 3, **characterized in that** the switchgear bay (1) has a third busbar section (13) which is electrically connected to the first power connection (4a, 4b, 4c) and whose gas-insulated third busbar conductor (18a, 18b, 18c) defines a fifth axis (19a, 19b, 19c) which extends orthogonally with respect to the longitudinal direction (3) and orthogonally with respect to the first axis (5a, 5b, 5c), wherein the third busbar section (13) has a third busbar housing (17) in which all of the third busbar conductors (18a, 18b, 18c) are arranged in a common gas area (54).

5. Switchgear bay according to Claim 4, **characterized in that** the fifth axis (19a, 19b, 19c) has the same orientation co-ordinates as a third axis (16a, 16b, 16c) which has been rotated through 180° about the first axis (5a, 5b, 5c).

6. Switchgear bay (10) according to Claim 4 or 5, **characterized by** a second busbar section (45) which is electrically connected to the second power connection (6a, 6b, 6c).

7. Switchgear bay according to Claim 4 or 5, **characterized by** a first busbar section (12), which is likewise electrically connected to the first power connection (4a, 4b, 4c).

8. Switchgear bay according to Claim 7, **characterized in that** the third busbar section (13) and the first busbar section (12) are attached to a common connecting module (34), which forms a conductor node (35a, 35b, 35c) for each conductor phase, wherein the connecting module (34) is connected to the first power connection (4a, 4b, 4c) of the circuit breaker (2a, 2b, 2c) which is associated with the phase conductor.

9. Switchgear bay according to Claim 8, **characterized in that** the connecting module (34) has a working grounding switch for each conductor phase, wherein all the conductor phases in the connecting module (34) are arranged jointly encapsulated in a common gas area.

10. Switchgear bay according to one of Claims 8 and 9, **characterized in that**, seen in the direction of the third axis (16a, 16b, 16c), all the conductor nodes (35a, 35b, 35c) are arranged at the same height in the direction of the first axis (5a, 5b, 5c).

11. Switchgear bay according to one of Claims 1 to 10, **characterized in that** each third busbar conductor (18a, 18, 18c) is arranged at a fourth distance (52) from the third busbar housing (17), and either each first busbar conductor (15a, 15b, 15c) is arranged at the fourth distance (52) from the first busbar housing (14), or each second busbar conductor (46a, 46b, 46c) is arranged at the fourth distance (52) from the second busbar housing (49), wherein the fourth distance (52) is shorter than a fifth distance (55) at which the busbar conductors (15a, 15b, 15c; 46a, 46b, 46c; 18a, 18, 18c) of the same busbar section (12, 45, 13,) are arranged away from one another.

12. Switchgear bay according to one of Claims 1 to 11, **characterized in that** first connecting areas (28) of each busbar section (12, 45, 13) for each switchgear bay (1, 10) are arranged on a fourth plane (30), and second connecting areas (29) of each busbar section (12, 45, 13) are arranged on a fifth plane (31), wherein the fourth plane (30) is arranged parallel to the fifth plane, and the fourth plane (31) extends parallel to a sixth plane (32) on which the first axis (5a, 5b, 5c) and the second axis (7a, 7b, 7c) are arranged.

13. Switchgear bay according to one of Claims 1 to 12, **characterized in that** each busbar conductor (15a, 15b, 15c; 46a, 46b, 46c; 18a, 18, 18c) is in each case held in the first connecting area (28) and in the second connecting area (29) via a single-phase insulator, such that the first connecting areas (28) and the second connecting areas (29) form single-phase bushings from the corresponding busbar housing (14, 49, 17).

14. Switchgear bay according to one of Claims 1 to 13, **characterized in that** the first busbar conductors (15a, 15b, 15c), the second busbar conductors (46a, 46b, 46c) and the third busbar conductors (18a, 18b, 18c) are cylindrical.

15. Substation having at least three switchgear bays according to one of Claims 1 to 14, wherein at least two switchgear bays (1) are of a first type, which each have a first busbar section (12) and/or a third busbar section (13), and wherein at least one switchgear bay (10) is a switchgear bay of a second type, which second type (10) has a second busbar section (45) and a third busbar section (13).

16. Substation according to Claim 15, **characterized in that** the switchgear bays of the first type (1) and of the second type (10) are connected to one another by means of a double busbar arrangement, wherein the first type (1) of switchgear bays is a cable bay (1) or an open-air outgoer, and wherein the second type (10) of switchgear bays is a coupling bay (10).

## Revendications

1. Tableau de commutation (1, 10) à isolation gazeuse, avec au moins trois phases de conducteurs pour différents potentiels électriques, chaque phase de conducteur étant susceptible d'être interrompue avec un propre interrupteur de puissance (2a, 2b, 2c) et les interrupteurs de puissance (2a, 2b, 2c) définissant par leur forme une direction longitudinale (3) et au moins l'un des interrupteurs de puissance (2a, 2b, 2c) comportant un premier raccordement de puissance (4a, 4b, 4c), lequel définit un premier axe (5a, 5b, 5c) qui s'étend de manière orthogonale par rapport à la direction longitudinale (3) et l'interrupteur de puissance (2a, 2b, 2c) comportant un deuxième raccordement de puissance (6a, 6b, 6c) lequel s'étend de manière orthogonale par rapport à la direction longitudinale (3) dans la même direction que le premier raccordement de puissance (4a, 4b, 4c) et lequel deuxième raccordement de puissance (6a, 6b, 6c) définit un deuxième axe (7a, 7b, 7c), l'interrupteur de puissance (2a, 2b, 2c) étant susceptible d'être relié en étant conducteur électriquement par l'intermédiaire du premier raccordement de puissance (4a, 4b, 4c) chaque fois avec un premier conducteur (15a, 15b, 15c) de barre collectrice à isolation gazeuse d'un premier tronçon (12) de barre collectrice, de sorte que le premier conducteur (15a, 15b, 15c) de barre collectrice définisse un troisième axe (16a, 16b, 16c) qui s'étend de manière orthogonale par rapport à la direction longitudinale (3) et de manière orthogonale par rapport au premier axe (5a, 5b, 5c) et de manière orthogonale par rapport au deuxième axe (7a, 7b, 7c) et le premier tronçon (12) de barre collectrice comportant un premier boîtier (14) de barre collectrice dans lequel tous les premiers conducteurs (15a, 15b, 15c) de barre collectrice sont placés dans un premier espace gazeux commun, **caractérisé en ce qu**'un premier écart (25) entre le premier axe (5a, 5b, 5c) et le deuxième axe (7a, 7b, 7c) est dimensionné de telle sorte que
a) dans un premier état de montage, le tableau de commutation (1) comporte un premier tronçon (12) de barre collectrice électriquement raccordé sur le premier raccordement de puissance (4a, 4b, 4c) ;
b) dans un deuxième état de montage, le tableau de commutation (10) présente un deuxième tronçon (45) de barre collectrice électriquement raccordé sur le deuxième raccordement de puissance (6a, 6b, 6c) avec un deuxième conducteur (46a, 46b, 46c) de barre collectrice à isolation gazeuse, lequel deuxième conducteur (46a, 46b, 46c) de barre collectrice définit un quatrième axe (47a, 47b, 47c), dans le deuxième état de montage, au niveau de la position et de l'orientation, le quatrième axe (47a, 47b, 47c) étant placé sur une droite commune avec le troisième axe (16a, 16b, 16c) et le deuxième tronçon (45) de barre collectrice comportant un deuxième boîtier (49) de barre collectrice dans lequel tous les deuxièmes conducteurs (46a, 46b, 46c) de barre collectrice sont placés dans un espace gazeux commun.

2. Tableau de commutation selon la revendication 1, **caractérisé en ce que** dans la direction longitudinale (3), le troisième axe (16a, 16b, 16c) est placé avec un deuxième écart (26) par rapport au premier axe (5a, 5b, 5c) et **en ce que** dans la direction longitudinale, le quatrième axe (47a, 47b, 47c) est placé avec un troisième écart (48) par rapport au deuxième axe (7a, 7b, 7c), le premier écart (25) présentant une longueur égale à la somme du deuxième écart (26) et du troisième écart (48), le deuxième écart (26) et le troisième écart (48) étant de longueur identique.

3. Tableau de commutation selon la revendication 1 ou la revendication 2, **caractérisé en ce que** chaque premier raccordement de puissance (4a, 4b, 4c) des interrupteurs de puissance (2a, 2b, 2c) est susceptible d'être relié de façon électriquement conductrice avec un premier conducteur (15a, 15b, 15c) de barre collectrice à isolation gazeuse correspondant d'un premier tronçon (12) de barre collectrice de telle sorte que les troisièmes axes (16a, 16b, 16c) se situent dans un premier plan (27) et **en ce que** le premier plan (27) s'étend de manière orthogonale par rapport à l'axe longitudinal (3) et à la parallèle du premier axe (5a, 5b, 5c).

4. Tableau de commutation selon l'une quelconque des revendications 1 à 3, **caractérisé en ce que** le tableau de commutation (1) comporte un troisième tronçon (13) de barre collectrice raccordé électriquement sur le premier raccordement de puissance (4a, 4b, 4c), dont le troisième conducteur (18a, 18b, 18c) de barre collectrice à isolation gazeuse définit un cinquième axe (19a, 19b, 19c), lequel s'étend de manière orthogonale par rapport à la direction longitudinale (3) et de manière orthogonale par rapport au premier axe (5a, 5b, 5c), le troisième tronçon (13) de barre collectrice comportant un troisième boîtier (17) de barre collectrice, dans lequel tous les troisièmes conducteurs (18a, 18b, 18c) de barre collectrice sont placés dans un espace gazeux (54) commun.

5. Tableau de commutation selon la revendication 4, **caractérisé en ce que** le cinquième axe (19a, 19b, 19c) comporte les mêmes coordonnées de position qu'un troisième axe (16a, 16b, 16c) en rotation à 180 degrés autour du premier axe (5a, 5b, 5c).

6. Tableau de commutation (10) selon la revendication 4 ou 5, **caractérisé par** un deuxième tronçon (45) de barre collectrice raccordé électriquement sur le deuxième raccordement de puissance (6a, 6b, 6c).

7. Tableau de commutation selon la revendication 4 ou la revendication 5, **caractérisé par** un premier tronçon (12) de barre collectrice également raccordé électriquement sur le premier raccordement de puissance (4a, 4b, 4c).

8. Tableau de commutation selon la revendication 7, **caractérisé en ce que** le troisième tronçon (13) de barre collectrice et le premier tronçon (12) de barre collectrice sont fixés sur un module de raccordement (34) commun, formant un noeud de conducteurs (35a, 35b, 35c) par phase de conducteur, le module de raccordement (34) étant raccordé au premier raccordement de puissance (4a, 4b, 4c) de l'interrupteur de puissance (2a, 2b, 2c) associé au conducteur de phase.

9. Tableau de commutation selon la revendication 8, **caractérisé en ce que** le module de raccordement (34) comprend une prise de terre par phase de conducteur, toutes les phases de conducteurs étant placées en étant blindées en commun dans un espace gazeux commun dans le module de raccordement (34).

10. Tableau de commutation selon l'une quelconque des revendications 8 ou 9, **caractérisé en ce que**, considérés dans la direction du troisième axe (16a, 16b, 16c), tous les noeuds de conducteurs (35a, 35b, 35c) sont placés sur la même hauteur, en direction du premier axe (5a, 5b, 5c).

11. Tableau de commutation selon l'une quelconque des revendications 1 à 10, **caractérisé en ce que** chaque troisième conducteur (18a, 18, 18c) de barre collectrice est placé avec un quatrième écart (52) par rapport au troisième boîtier (17) de barre collectrice et soit chaque premier conducteur (15a, 15b, 15c) de barre collectrice est placé avec le quatrième écart (52) par rapport au premier boîtier (14) de barre collectrice ou chaque deuxième conducteur (46a, 46b, 46c) de barre collectrice est placé avec le quatrième écart (52) par rapport au deuxième boîtier (49) de barre collectrice, le quatrième écart (52) étant inférieur à un cinquième écart (55) par lequel les conducteurs (15a, 15b, 15c ; 46a, 46b, 46c ; 18a, 18, 18c) du même tronçon (12, 45, 13) de barre collectrice sont éloignés les uns des autres.

12. Tableau de commutation selon l'une quelconque des revendications 1 à 11, **caractérisé en ce que** par tableau de commutation (1, 10), des premières zones de raccordement (28) de chaque tronçon (12, 45, 13) de barre collectrice sont placées dans un quatrième plan (30) et des deuxièmes zones de raccordement (29) de chaque tronçon (12, 45, 13) de barre collectrice sont placés dans un cinquième plan (31), le quatrième plan (30) étant placé à la parallèle du cinquième plan et le quatrième plan (31) s'étendant à la parallèle d'un sixième plan (32) dans lequel sont placés le premier axe (5a, 5b, 5c) et le deuxième axe (7a, 7b, 7c).

13. Tableau de commutation selon l'une quelconque des revendications 1 à 12, **caractérisé en ce que** chaque conducteur (15a, 15b, 15c ; 46a, 46b, 46c ; 18a, 18, 18c) est maintenu dans la première zone de raccordement (28) et dans la deuxième zone de raccordement (29) chaque fois par l'intermédiaire d'un isolateur monophasé, de sorte que les premières zones de raccordement (28) et les deuxièmes zones de raccordement (29) forment des passages monophasés hors du boîtier (14, 49, 17) de barre collectrice correspondant.

14. Tableau de commutation selon l'une quelconque des revendications 1 à 13, **caractérisé en ce que** les premiers conducteurs (15a, 15b, 15c) de barre collectrice, les deuxièmes conducteurs (46a, 46b, 46c) de barre collectrice et les troisièmes conducteurs (18a, 18b, 18c) de barre collectrice sont conçus de forme cylindrique.

15. Sous-poste avec au moins trois tableaux de commutation selon l'une quelconque des revendications 1 à 14, au moins deux tableaux de commutation (1) étant d'un premier type, lesquels comportent chacun un premier tronçon (12) de barre collectrice et/ou un troisième tronçon (13) de barre collectrice et au moins un tableau de commutation (10) étant un tableau de commutation d'un deuxième type, lequel deuxième type (10) comporte un deuxième tronçon (45) de barre collectrice et un troisième tronçon (13) de barre collectrice.

16. Sous-poste selon la revendication 15, **caractérisé en ce que** les tableaux de commutation du premier type (1) et du deuxième type (10) sont reliés les uns aux autres au moyen d'un agencement de barres collectrices doubles, le premier type (1) de tableaux de commutation étant une zone de câbles (1) ou une sortie sur le départ et le deuxième type (10) de zones de commutation étant une zone de couplage (10).
